# EUROPEAN PATENT SPECIFICATION

(11) **EP 4 350 156 B1**
(45) Date of publication and mention of the grant of the patent: **12.11.2025**
(21) Application number: 23386022.0
(22) Date of filing: 22.03.2023
(51) Int. Cl.: F16B 5/06

(54) **HOLDING, CLAMPING AND ADJUSTMENT FITTING OF GLASS PANEL VERTICAL INCLINATION WITHIN HOLDING SECTION**
HALTE- UND KLEMMFASSUNG FÜR DIE ANPASSUNG DER VERTIKALEN NEIGUNG EINER GLASPLATTE IN EINER HALTEVORRICHTUNG
ÉLÉMENT DE RETENUE ET DE SERRAGE POUR L'AJUSTEMENT D'INCLINAISON VERTICALE D'UNE DALLE EN VERRE DANS UN SUPPORT

(30) Priority: 04.10.2022 GR 20220100815
(43) Date of publication of application: 10.04.2024
(73) Proprietor: Kontos, Nikolaos, 19300 Aspropyrgos (GR)
(72) Inventor: Kontos, Nikolaos, 19300 Aspropyrgos (GR)
(74) Representative: Yazitzoglou, Evagelia S.

(56) References cited:
- WO-A1-2018/111208
- FR-A1- 2 930 270
- US-A1- 2015 267 415

## Description

The present invention relates to holding, clamping and adjustment fitting of glass panel vertical inclination within a holding structure of appropriate shape according to claim 1.

Moreover, the invention relates to holding, clamping and adjustment system of glass panel (6) vertical inclination within an appropriate holding section.

Holding and adjustment fittings of glass panel inclination are known from the state in the art. In particular, regarding the use of glass panels, the applied heretofore solutions in glass panel holding systems are of various materials and technical levels. The commonest simple solutions are comprised of rubber or plastic, usually wedge-shaped, gaskets which enter between glass panel and holding section, though without the ability to adjust to the changing vertical inclination of the glass panel when that is required for technical as well as beauty reasons. Moreover, certain gaskets make use of elastics of various dimensions to adjust to corresponding clearances or inclinations. However, due to the fact that this clearance is not constant and measurable in a building structure, there is a need for continuous testing and repetition of the placement-removal procedure of various gaskets before final interlocking is achieved. Solutions of this kind are relatively simple and cost-effective, however they do not render the most appropriate and safe holding while many times can be time-consuming.

In case of changing inclination or in need of its adjustment, solutions with two wedge-shaped gaskets (two wedges), which are placed on both sides of the glass panel and can be of similar or different shape and dimensions, are also applied, so that they can adjust to the specific clearances. However, these existing solutions present the same technical features and operating principles as those of the simple gaskets too, as well as the same technical problems.

Another solution which is used consists in the "cassette"-type holding and clamping systems, which through the use of movable and fixed parts within the section, interconnected by means of screws, try to achieve adjustment and clamping of the fittings in the glass panel. In such cases, the adjustment screws through the use of tools move the "cassette" or part of the fittings comprising it up or down relative to the vertical axis, thereby increasing or reducing the pressure surface of the fitting to the glass panel and changing its vertical inclination. This solution is complex, more expensive and requires specialized tools for its application as well as extra equipment and time for its implementation. Moreover, when the "cassette" system is located on both sides of the glass panel, there is a need for continuous adjustments on both sides of the structure before final inclination adjustment is achieved, which means technical difficulties and a need for specialized equipment for this work.

Finally, certain existing holding applications make use of solutions with movable parts holding the glass panel by means of bolting, though without the ability to adjust its vertical inclination.

US 2015/0267415 A1 discloses a clamping system for mounting glass balustrade, which includes a base with a U-shaped channel, an adjusting component A and an adjusting component B, the adjusting component A comprising: an L-shaped Plate with an arc groove inside, fitting for an arc panel and an arc panel with longer arc-length than that of the arc groove in the L-shaped Plate.

According to the present invention, a holding, clamping and adjustment fitting of glass panel vertical inclination within a holding section according to claim 1 is proposed, which comprises a wedge-shaped fixed part, one side of which is flat and in assembled state of the glass panel contacts the section, and a movable part, wherein one side of the movable part in assembled state of the glass panel contacts the glass panel and is flat and the opposite side contacting the fixed part is convex and fully or partially contacts the surface of the fixed part, which is correspondingly concave.

As a result, the movable part of the fitting can move along circular arc occupying various inclined positions relative to the imaginary vertical axis of the fixed part, so that the side of the movable part in assembled state of the glass panel contacting the glass panel adopts the proper vertical inclination relative to section and glass panel geometry concurrently.

The fitting remains fixed in one side thereof, namely its fixed part, fixedly adjusting to the specific section or holding structure, whereas its other side, namely its movable part, can move along circular arc occupying various inclined positions relative to the imaginary vertical axis. Functioning this way, it can provide vertical inclination adjustment of the specific glass panel supported by it relative to the perpendicular axis of the structure, and moreover it can also provide the necessary holding and constant clamping of the specific glass panel in the final application position in a very easy and simple manner, without using specialized tools. This way, a technically and aesthetically flawless structure can be realized.

The holding, clamping and adjustment fitting of glass panel vertical inclination according to the present invention allows during its interlocking with glass panel its immobilization at the vertical inclination angle or position that is required each time within aluminum section or other structure and its complete clamping and holding in the final desired position, whereas it can be made of various metal or/and plastic or/and other materials having the specific required dimensions. Dimensions are not binding and can be adjusted to the needs of each structure.

The fitting can be used in many different and various applications. The most characteristic and basic application refers to mainly architectural structures, in which glass panels are used, such as in dividers, railings or balconies and in space and other similar structure boundary marking systems. It can be of various dimensions and lengths and hold glass panels of different thicknesses and dimensions, depending on the specific application.

Through the use of the vertical inclination holding, clamping and adjustment fitting the use of simple wedge-shaped gaskets or complex "cassette"-type systems with screws and different movable parts is avoided. The whole arrangement, placement and adjustment is done without specialized tools, screws, with plastic or rubber gaskets of various dimensions as in common applications. It is done quickly and safely too.

According to the invention, the fixed part includes on its upper part a hole which allows resin infusion, which helps in final stabilization of the fitting in assembled state of the glass panel, wherein the hole is connected to grooves formed vertically and horizontally on the convex side of the movable part, in which spreading of the resin takes place, which provides proper welding of the movable with the fixed part over a large surface and not on spots.

According to a form of the invention, both the fixed and the movable part may comprise on their interlocking surfaces small indentations, which help in better interlocking and adoption of proper inclination between the two fittings.

The movable side of the fitting fully contacts all over its surface at all times the specific fitting which it holds (glass panel), following its inclination in the structure and constantly exerting the maximum possible clamping pressure on it. The fitting can be of the appropriate dimensions (thickness and length) to hold glass panels or other similar materials of different dimensions and thickness. According to a form of the invention, the movable part may be circular-disc-section-shaped.

The proposed holding, clamping and adjustment fitting of glass panel vertical inclination within a holding section, comprising a wedge-shaped fixed part, one side of which is flat, and a movable part, wherein one side of the movable part is flat and the opposite side contacting the fixed part is convex and fully or partially contacts the surface of the fixed part, which is correspondingly concave, so that the movable part can move along circular arc occupying various inclined positions relative to the imaginary vertical axis of the fixed part, so that the flat side of the movable part adopts the specific desired inclination, has the following features and advantages compared to corresponding systems or fittings:
- Ease at placement and adjustment of vertical inclination, even without tools.
- Ability to hold glass panels of various dimensions.
- Ability to hold at different angles of inclination relative to the vertical axis of the structure.
- Simplicity of assembling, placement and application.
- Reliability in holding and application by exerting maximum pressure uniformly all over the contact surface.
- Safety in use.

The present invention will be more clearly understood by reading the description and figures. In these figures, the principles of the technical design are not followed faithfully. Illustrations are made without many details and simplified.

Figure 1 presents a perspective view of a fitting according to the present invention, wherein the movable part of the fitting is presented inclined relative to the imaginary vertical axis of the fixed part, whereas figure 2 presents a perspective view of a fitting according to the present invention, wherein the movable part of the fitting, namely the surface contacting the glass panel, is parallel to the imaginary vertical axis of the fixed part.

In figure 3, a standard application and use of the fitting in glass panel holding system is presented, whereas figure 4 presents side section views of the fitting with the movable part being inclined at various angles relative to the imaginary vertical axis of the fixed part.

In figure 5, a perspective view of the movable part of the fitting according to a form of the invention is presented, whereas in figure 6 a perspective view of the fixed part of the fitting according to a form of the invention is presented.

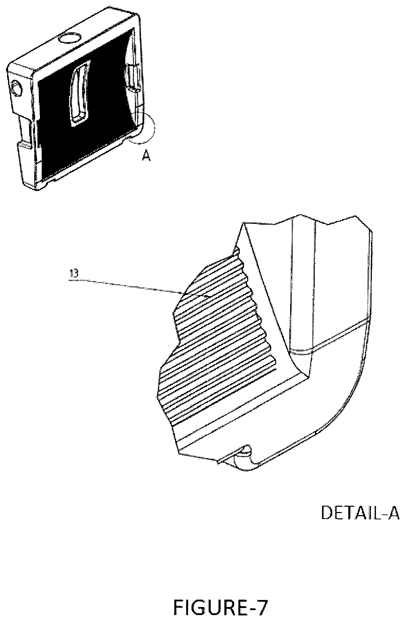

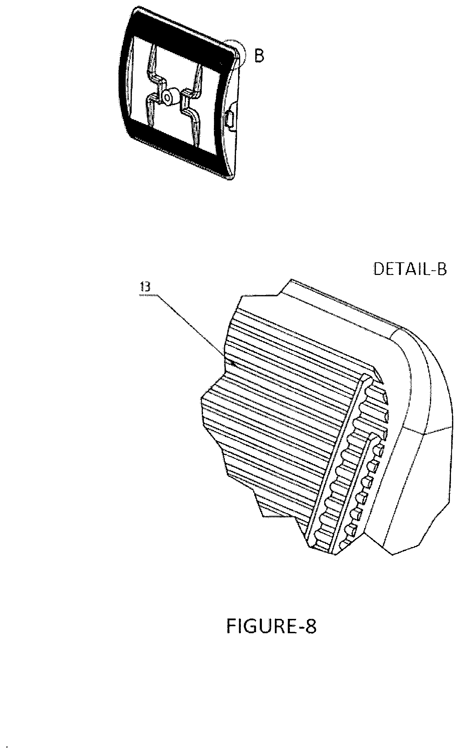

In figures 7 & 8, a perspective view of both the movable part of the fitting in detail and the fixed part of the fitting according to a form of the invention is presented, so that the interlocking indentations of the two fittings are made clear.

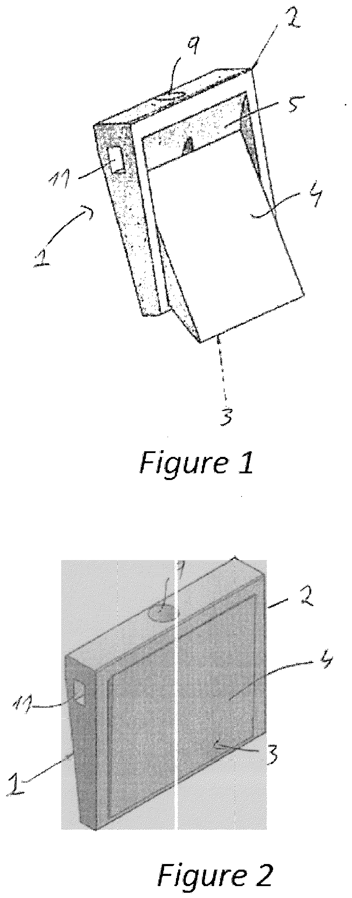

Regarding figures 1 and 2, in these a holding, clamping and adjustment fitting of glass panel vertical inclination 1 within a holding section is shown, which comprises a wedge-shaped fixed part 2, one side of which is flat and in assembled state of the glass panel contacts the section, and a movable part 3, wherein one side 4 of movable part 3 in assembled state of the glass panel contacts the glass panel and is flat and the opposite side contacting fixed part 2 is convex and fully or partially contacts surface 5 of fixed part 2, which is correspondingly concave.

As a result, movable part 3 of the fitting can move along circular arc occupying various inclined positions relative to the imaginary vertical axis of fixed part 2. In figure 1, side 4 of movable part 3 in assembled state of the glass panel contacting the glass panel is presented inclined relative to the imaginary vertical axis of fixed part 2, whereas in figure 2 is parallel to the imaginary vertical axis of the fixed part.
Fitting 1 comprises at least one groove 11 for movement and removal of fitting 1 from the specific glass panel holding section. Groove 11 is suitable for placement of a tool by means of which fitting 1 can be removed from holding section 5.

When fitting 1 is placed within holding section 5, with glass panel 6 installed, there is no easy access and in case fitting 1 needs to be moved or removed this is done by means of a tool which will hook onto the at least one groove 11 and move fitting 1 properly. Preferably, two grooves 11 are envisaged on opposite, in assembled state of glass panel 6, accessible sides of fitting 1, which do not contact section 5 or glass panel 6, and onto which a tool (e.g., pliers or nibblers) can be hooked.

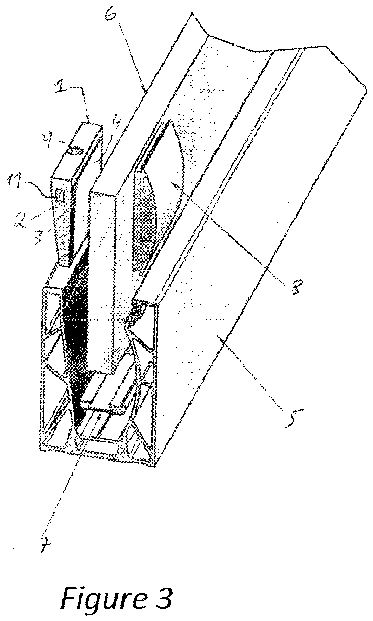

A standard application and use of the fitting takes place in glass panel holding systems, in particular in adjustable or fixed barrier (parapet) structures. In figure 3, the application of the fitting in such a system is presented as an example.

In this kind of systems is made use of various U-shaped holding sections 5 properly designed to be placed in the architectural or other structure and include in their internal geometry both glass panel 6 and all system fittings.

In the center of holding section 5 supporting base 7 is placed, which is usually a grooved plastic section. Supporting base 7 serves as supporting seat of glass panel 6 and is the first fitting being introduced in the system.

The next step in the system assembling, in this specific example, consists of placing a supporting fitting 8 which is of proper shape and geometry to cooperate with both the specific U-shaped section and the glass panel as well as the holding, clamping and adjustment fitting to be used in adjustable or fixed structures. This is followed by the placement of glass panel 6 in the system.

Finally, holding, clamping and adjustment fitting 1 of glass panel 6 vertical inclination according to the present invention is introduced in the system. This fitting is of proper geometry and shape to cooperate with U-shaped aluminum section 5 on one side thereof, namely on one side of fixed part 2, and glass panel 6 on the other one through flat side 4 of movable part 3. Fitting 1 may be introduced in the system in a simple manner (simple pressure or by hitting it lightly) and holds glass panel 6 in the desired position and inclination within aluminum section 5 without specialized tools.

In the example of figure 3, the fitting according to the invention is applied, in the case of a holding and clamping system of glass panels within a section 5, between section 5 and one side of glass panel 6, whereas between the section and the other side of the glass panel are applied supporting fittings 8 of proper geometry. In other implementations, in the case of a holding and clamping system of glass panels within a section 5, holding and clamping fittings according to the invention may be applied between the section and the two sides of the glass panel.

The holding, clamping and adjustment fitting of glass panel vertical inclination is not a simple wedge-shaped gasket as in corresponding applications, but can operate at all times properly inclined relative to section 5 and glass panel 6 geometry concurrently, constantly exerting the appropriate pressure, to the desired and proper inclination.

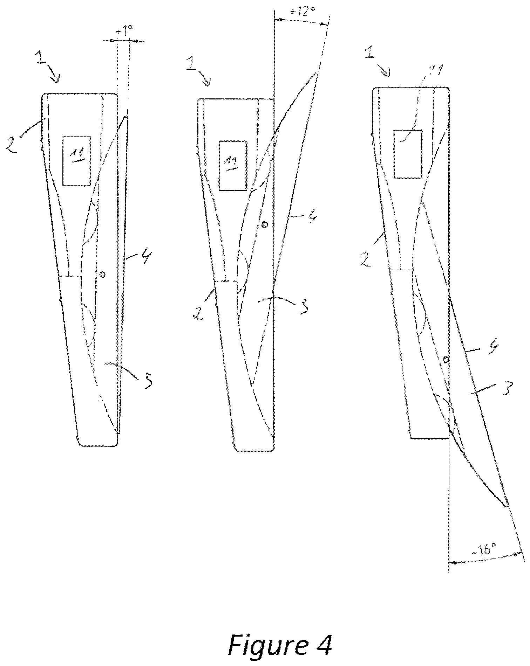

The holding ability at various angles of inclination relative to the vertical axis provided by fitting 1 is understood in figure 4, in which side section views of fitting 1 are presented, with movable part 3 being at various random and characteristic angles of inclination relative to the imaginary vertical axis of fixed part 2.

On the left side of figure 4, flat side 4 of movable part 3 contacting the glass panel is at an angle of inclination of one degree relative to the imaginary vertical axis of fixed part 2, whereas, in the middle of figure 4, flat side 4 of movable part 3 is at an angle of inclination of 12 degrees relative to the imaginary vertical axis of fixed part 2. On the right side of figure 4, flat side 4 of movable part 3 is at an angle of inclination of -16 degrees relative to the imaginary vertical axis of fixed part 2. It is obvious that the fitting provides many holding options, at various angles of inclination.

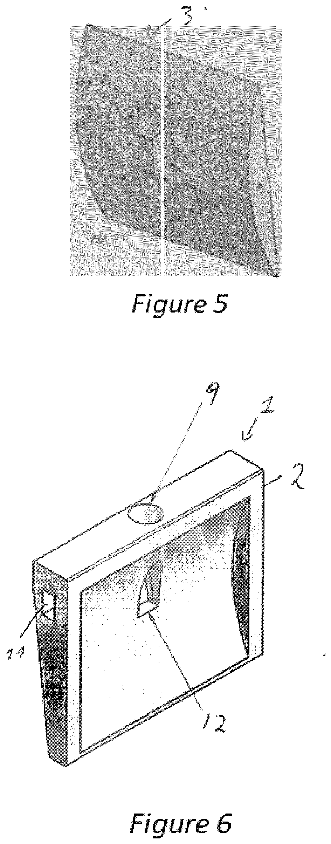

Moreover, according to the invention and regarding figures 5 and 6, fitting 1 is of proper internal geometry allowing resin infusion, which helps in the final stabilization of the system and its safe use. In particular, fixed part 2 includes on its upper part hole 9, shown in figures 1, 2, 3 and 6, allowing resin or other suitable material infusion, which helps in the final stabilization of fitting 1 in assembled state of the glass panel.

According to the invention, hole 9 is connected to grooves 10 formed vertically and horizontally on the convex side of movable part 3 contacting fixed part 2, in which grooves 10 spreading of the resin takes place, which provides proper welding of the movable with the fixed part over a large surface and not on spots. In figure 6, end 12 of hole 9 at the fixed part of fitting 1 is shown, from which the resin is spread in grooves 10.

According to the invention, both the movable part of the fitting and the fixed part of the fitting can bear on their interlocking surfaces small indentations, which help in smooth movement and interlocking and better controlled changing of inclination of the fitting being assembled (glass panel).

## Claims

1. Holding, clamping and adjustment fitting (1) of glass panel (6) vertical inclination within a holding section (5), comprising a wedge-shaped fixed part (2), one side of which is flat and in assembled state of the glass-panel (6) can contact the section (5), and a movable part (3), wherein one side (4) of the movable part in assembled state of the glass panel (6) contacts the glass panel (6) and is flat and the opposite side contacting the fixed part (2) is convex and fully or partially contacts the surface of the fixed part (2), which is correspondingly concave, so that the movable part (3) can move along circular arc occupying various inclined positions relative to the imaginary vertical axis of the fixed part (2), so that the side (4) of the movable part (3) in assembled state of the glass panel (6) contacting the glass panel (6) can adopt the proper inclination relative to section (5) and glass panel (6) geometry concurrently, **characterized in that** the fixed part (2) includes on its upper part a hole (9) allowing resin infusion, which helps in the final stabilization of the fitting (1) in assembled state of the glass panel (6), wherein the hole (9) is connected to grooves (10) formed vertically and horizontally on the convex side of the movable part (3), in which spreading of the resin can take place, which provides proper welding of the movable with the fixed part (3, 2) over a large surface and not on spots.

2. Holding, clamping and adjustment fitting (1) of glass panel (6) vertical inclination within a holding section (5) according to claim 1, **characterized in that** the movable part (3) is circular-disc-section-shaped.

3. Holding, clamping and adjustment fitting (1) of glass panel (6) vertical inclination within a holding section (5) according to claim 1 or 2, **characterized in that** it is made of metal or/and plastic or/and rubber or and other materials.

4. Holding, clamping and adjustment fitting (1) of glass panel (6) vertical inclination within a holding section (5) according to claim 1, 2 or 3, **characterized in that** it comprises at least one groove (11) for the movement and removal of the fitting (1) from a glass panel holding section (5), wherein the groove (11) is suitable for the placement of a tool by means of which the fitting (1) can be removed from the holding section (5).

5. Holding, clamping and adjustment fitting (1) of glass panel (6) vertical inclination within a holding section (5) according to claim 1, 2, 3 or 4, **characterized in that** both the surface of the fixed part (2), which is correspondingly concave, so that the movable part (3) can move along circular arc occupying various inclined positions relative to the imaginary vertical axis of the fixed part (2), and the surface of the movable part (3) are provided with the appropriate toothing allowing better control of the relative movement of the fittings and enhancing holding in the desired position.

6. Holding, clamping and adjustment system of glass panel (6) vertical inclination within a holding section (5), **characterized in that** it comprises holding, clamping and adjustment fittings (1) according to one of claims 1 to 5, which are applied between the section (5) and one side of the glass panel (6), whereas between the section (5) and the other side of the glass panel (6) conventional supporting fittings are applied, or **characterized in that** it comprises holding, clamping and adjustment fittings (1) according to one of claims 1 to 5, which are applied between the section (5) and the two sides of the glass panel (6).

## Patentansprüche

1. Halte-, Klemm- und Justierfassung (1) für eine vertikale Neigung einer Glasplatte (6) innerhalb einer Haltevorrichtung (5), bestehend aus einem keilförmigen Festteil (2), dessen eine Seite eben ist und im montierten Zustand der Glasplatte (6) am Profil (5) anliegen kann, und einem beweglichen Teil (3), wobei eine Seite (4) des beweglichen Teils im montierten Zustand der Glasplatte (6) die Glasplatte (6) berührt und eben ist und die gegenüberliegende, am Festteil (2) anliegende Seite konvex ist und die Oberfläche des Festteils (2) ganz oder teilweise berührt, das entsprechend konkav ist, sodass sich das bewegliche Teil (3) entlang eines Kreisbogens bewegen kann und dabei verschiedene Neigungspositionen relativ zur imaginären vertikalen Achse des festen Teils (2) einnimmt, sodass die Seite (4) des beweglichen Teils (3), die im montierten Zustand der Glasplatte (6) mit der Glasplatte (6) in Kontakt steht, gleichzeitig die richtige Neigung relativ zum Abschnitt (5) und zur Geometrie der Glasplatte (6) einnehmen kann, **dadurch gekennzeichnet, dass** das feste Teil (2) an seinem oberen Teil ein Loch (9) aufweist, das das Eingießen von Harz ermöglicht, was zur endgültigen Stabilisierung der Fassung (1) im montierten Zustand der Glasplatte (6) beiträgt, wobei das Loch (9) mit Rillen (10) verbunden ist, die vertikal und horizontal auf der konvexen Seite des beweglichen Teils (3) ausgebildet sind und in denen sich das Harz verteilen kann, wodurch eine richtige Verschweißung des beweglichen mit dem festen Teil (3, 2) über eine große Fläche und nicht an Punkten gewährleistet wird.

2. Halte-, Klemm- und Justierfassung (1) für die vertikale Neigung einer Glasplatte (6) innerhalb einer Haltevorrichtung (5) nach Anspruch 1, **dadurch gekennzeichnet, dass** der bewegliche Teil (3) kreisscheibenförmig ausgebildet ist.

3. Halte-, Klemm- und Justierfassung (1) für die vertikale Neigung einer Glasplatte (6) innerhalb einer Haltevorrichtung (5) nach Anspruch 1 oder 2, **dadurch gekennzeichnet, dass** er aus Metall und/oder Kunststoff und/oder Gummi oder anderen Materialien besteht.

4. Halte-, Klemm- und Justierfassung (1) für die vertikale Neigung einer Glasplatte (6) innerhalb einer Haltevorrichtung (5) nach Anspruch 1, 2 oder 3, **dadurch gekennzeichnet, dass** er mindestens eine Nut (11) zum Bewegen und Entfernen der Fassung (1) von einer Haltevorrichtung (5) der Glasplatte umfasst, wobei die Nut (11) zum Ansetzen eines Werkzeugs geeignet ist, mit dem die Fassung (1) von der Haltevorrichtung (5) entfernt werden kann.

5. Halte-, Klemm- und Justierfassung (1) für die vertikale Neigung einer Glasplatte (6) innerhalb einer Haltevorrichtung (5) nach Anspruch 1, 2, 3 oder 4, **dadurch gekennzeichnet, dass** sowohl die Oberfläche des festen Teils (2), die entsprechend konkav ist, sodass sich der bewegliche Teil (3) entlang eines Kreisbogens bewegen und verschiedene Neigungspositionen relativ zur imaginären vertikalen Achse des festen Teils (2) einnehmen kann, als auch die Oberfläche des beweglichen Teils (3) mit der entsprechenden Verzahnung versehen sind, die eine bessere Kontrolle der relativen Bewegung der Beschläge ermöglicht und den Halt in der gewünschten Position verbessert.

6. Halte-, Klemm- und Justiersystem für die vertikale Neigung einer Glasplatte (6) innerhalb einer Haltevorrichtung (5), **dadurch gekennzeichnet, dass** sie Halte-, Klemm- und Justierfassungen (1) nach einem der Ansprüche 1 bis 5 umfasst, die zwischen der Vorrichtung (5) und einer Seite der Glasplatte (6) angebracht sind, während zwischen der Vorrichtung (5) und der anderen Seite der Glasplatte (6) herkömmliche Stützfassungen angebracht sind, oder **dadurch gekennzeichnet, dass** sie Halte-, Klemm- und Justierfassungen (1) nach einem der Ansprüche 1 bis 5 umfasst, die zwischen der Vorrichtung (5) und den beiden Seiten der Glasplatte (6) angebracht sind.

## Revendications

1. Élément de retenue, de serrage et de réglage (1) d'une dalle en verre (6) à inclinaison verticale dans une section de retenue (5), comprenant une partie cunéiforme fixe (2), un côté de celle-ci est plat et étant en état assemblé de la dalle en verre (6) peut entrer en contact avec la section (5), et une partie mobile (3), dans laquelle un côté (4) de la partie mobile étant en état assemblé de la dalle en verre (6) est en contact avec le dalle en verre (6) et est plat, tandis que le côté opposé étant en contact avec la partie fixe (2) est convexe et en contact total ou partiel avec la surface de la partie fixe (2), qui est concave en conséquence, et de cette façon, la partie mobile (3) peut se déplacer le long d'un arc de cercle en occupant diverses positions inclinées par rapport à l'axe vertical imaginaire de la partie fixe (2), et de cette façon, le côté (4) de la partie mobile (3) à l'état assemblé de la dalle en verre (6) en contact avec la dalle en verre (6) peut adopter l'inclinaison appropriée par rapport simultanément à la géométrie de la section (5) et de la dalle en verre (6), **caractérisé en ce que** la partie fixe (2) comprend sur sa partie supérieure un trou (9) permettant l'infusion de résine, ce qui contribue à la stabilisation finale de la réglage (1) à l'état assemblé de la dalle en verre (6), ce trou (9) étant relié à des rainures (10) formées verticalement et horizontalement sur le côté convexe de la partie mobile (3), dans lesquelles la résine peut s'étaler, ce qui assure une soudure correcte de la partie mobile avec la partie fixe (3, 2) sur une grande surface et non sur des points.

2. Élément de retenue, de serrage et de réglage (1) d'une dalle en verre (6) à inclinaison verticale dans une section de retenue (5) selon la revendication 1, **caractérisé en ce que** la partie mobile (3) est en forme de section de disque circulaire.

3. Élément de retenue, de serrage et de réglage (1) d'une dalle en verre (6) à inclinaison verticale dans une section de retenue (5) selon la revendication 1 ou 2, **caractérisé en ce qu'**il est en métal et/ou en plastique et/ou en caoutchouc et/ou en d'autres matériaux.

4. Élément de retenue, de serrage et de réglage (1) d'une dalle en verre (6) à inclinaison verticale dans une section de retenue (5) selon la revendication 1, 2 ou 3, **caractérisé en ce qu'**il comprend au moins une rainure (11) pour le déplacement et le retrait de la réglage (1) d'une section de retenue (5) de dalle en verre, la rainure (11) étant adaptée pour le placement d'un outil au moyen duquel la réglage (1) peut être retirée de la section de retenue (5).

5. Élément de retenue, de serrage et de réglage (1) d'une dalle en verre (6) à inclinaison verticale dans une section de retenue (5) selon la revendication 1, 2, 3 ou 4, **caractérisé en ce que** tant la surface de la partie fixe (2), qui est concave en conséquence, de sorte que la partie mobile (3) peut se déplacer le long d'un arc de cercle occupant diverses positions inclinées par rapport à l'axe vertical imaginaire de la partie fixe (2), que la surface de la partie mobile (3) sont pourvues d'une denture appropriée permettant un meilleur contrôle du mouvement relatif des ferrures et améliorant le maintien en la position souhaitée.

6. Système de retenue, de serrage et de réglage d'une dalle en verre (6) à inclinaison verticale dans une section de retenue (5), **caractérisé en ce qu'**il comprend des ferrures de maintien, de serrage et de réglage (1) selon l'une des revendications 1 à 5, qui sont appliquées entre la section (5) et un côté de la dalle en verre (6), tandis qu'entre la section (5) et l'autre côté de la dalle en verre (6) sont appliquées des ferrures de support conventionnelles, ou **caractérisé en ce qu'**il comprend des ferrures de retenue, de serrage et de réglage (1) selon l'une des revendications 1 à 5, qui sont appliquées entre la section (5) et les deux côtés de la dalle en verre (6).
